Europäisches Patentamt

(19) European Patent Office

Office européen des brevets

(11) Publication number: **0 087 403**

**A1**

(12) # EUROPEAN PATENT APPLICATION

(21) Application number: 83850039.5

(22) Date of filing: 16.02.83

(51) Int. Cl.³: **B 23 K 26/06**
**B 29 C 27/02**

(30) Priority: 18.02.82 SE 8201020

(43) Date of publication of application:
31.08.83 Bulletin 83/35

(84) Designated Contracting States:
AT BE CH DE FR GB IT LI NL SE

(71) Applicant: OPTIK INNOVATION AB OIAB
Korsta Box 57
S-830 30 Lit(SE)

(72) Inventor: Asterö, Ulf Jan Erik
Korsta P.O. Box 57
S-830 30 Lit(SE)

(74) Representative: Burman, Tore et al,
Bergling & Sundbergh AB P.O. Box 7645
S-103 94 Stockholm(SE)

(54) Apparatus for treatment of an exterior circumferential area of an article by means of a radiation energy beam.

(57) A radiation energy beam for example a laser beam (5) is directed coaxially onto a conical mirror (3) such that the beam is deflected to the radiation field which forms an angle with and extends around the axis of the conical mirror. An annular internally reflecting frusto-conical mirror (1) receives the radiation field and deflects same onto a second annular frusto-conical internally reflecting mirror (2) which deflects the radiation field toward the axis of the mirror (2). An article (6,8,9) having a circumferential area to be treated by means of the field, is placed with its circumferential area coaxial with the mirror (2) such that the circumferential area is hit by the field (50). The circumferential area of the article can consist of a tubular thermoplastics sleeve (8) which tightly surrounds the thermoplastic tube (9) to which the sleeve is to be heat sealed.

Fig. 1

TITLE

APPARATUS FOR TREATMENT OF AN EXTERIOR
CIRCUMFERENTIAL AREA OF AN ARTICLE BY MEANS OF A
RADIATION ENERGY BEAM

TECHNICAL FIELD

The invention refers to an apparatus for treatment of an exterior circumferential area of an article by means of a radiation energy beam, and especially for annular sealing of a tubular thermoplastics foil by means of a laser beam to the exterior surface of a thermoplastics tube which is surrounded by the foil in the sealing area.

BACKGROUND

Heat sealing of thermoplastics foil by use of a laser beam is previously known from for example US patent 4 224 096 and DE OS 17 04 152.

In the medical field plastics bags are used, formed by thermoplastics foils, the bags having a throat in which a plastics tube is inserted and sealed to the inner surface of the throat. In the case the throat of the plastics bag and the tube consist of thermoplastics material such as polyethylene, polypropylene, polyvinyl chloride, polyvinylidene chloride etc., they can be heat sealed or heat welded to each other by utilization of application of a radiant energy beam. As the welding point moves along the circumferential line to form the circumferential weld or seal, stresses occur both in the circumferential direction in the weld formed, and also radially. The latter stresses tend to collapse the tube especially if the wall thickness thereof is relatively small. In any case the stresses tend to cause risks for leakage through the weld or seal. Furthermore, devices are required in order to cause a relative motion between the object to be sealed and the heating point of the energy beam on the article.

An object of the invention is therefore to provide an apparatus which permits treatment of an external annular circumferential area of an article by means of a radiation energy beam. A further object is to provide a device which permits annular sealing of a tubular thermoplastics foil by means of a laser beam to the exterior surface of a thermoplastics tube which is surrounded by the foil in the sealing area. A further object is to arrange the device such that the annular seal is made at one and the same time along the entire circumferential sealing area, whereby the stresses occurring during and after this sealing operation are symmetrical.

CHARACTERIZATION OF THE INVENTION

The inventive device comprises a first conical mirror means which is located coaxial with an incident radiation energy beam and is arranged to deflect the incident beam to a radiation field forming an angle with and extending around the axis of the first means, and a second annular mirror means which is located substantially coaxial with the first mirror means and which is arranged to receive the radiation field and deflect the field inwardly toward its axis where the article is arranged to be located in order to be hit by the radiation field in an annular exterior circumferential area.

The first mirror means can consist of an externally reflecting conical mirror which is turned with its top toward the incident beam. Alternatively, the first mirror means can be formed by an internally reflecting conical mirror, the top of which faces away from the incident beam, the top angle of the cone preferably being at least 60$^\circ$.

The second mirror means can consist an internally reflecting annular mirror, which preferably is arranged coaxial with the first mirror means. Alternatively, the second mirror means can comprise a first annular frusto-conical internally reflecting mirror which is arranged to receive the radiation field deflected by the externally reflecting conical mirror, and a second annular frusto-conical internally reflexting mirror which is arranged to receive the radiation field from the first annular mirror and deflect same toward its axis, preferably at right angles to its axis.

Preferably, the first mirror means as well as the other mirror means is rotationally symmetric. In the case the second mirror means consist of an annular mirror, the mirroring surface thereof is preferably cylindrical.

The inventive apparatus shall also be considered comprise embodiments wherein the mirroring surfaces instead of having a rotational symmetric conical shape can have a pyramidal form.

The laser beam incident to the apparatus can be considered have a substantially circular cylindrical cross section and be emitted from a conventional laser unit, and conventional deflection mirrors can be arranged between the laser unit and the inventive apparatus for providing the said incident direction for the laser beam onto the apparatus.

However, nothing prevents the laser beam incident to the apparatus from being converging or diverging. Convergence or divergence in the incident laser beam can be used if it is considered desirable for the article to be treated.

As mentioned above, the apparatus finds special use for heat sealing or heat welding of thermoplastics, but can also be used for a treatment such as welding, cutting, surface hardening, and so on, of annular exterior circumferential areas of articles of other materials, such as metal or curable plastics or cured plastics.

The invention which is defined in the appended claims, is below closer described in the form of non-limiting embodiments with reference to the appended drawing.

DRAWING

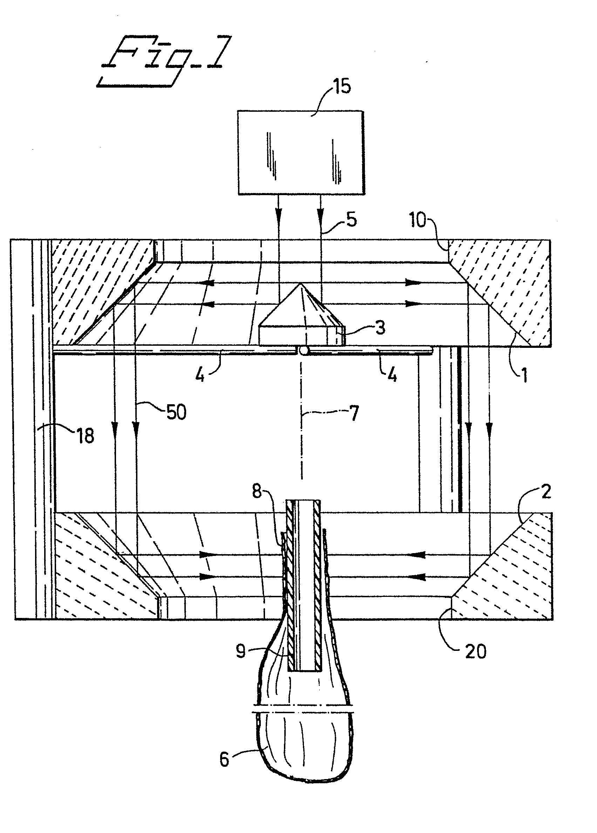

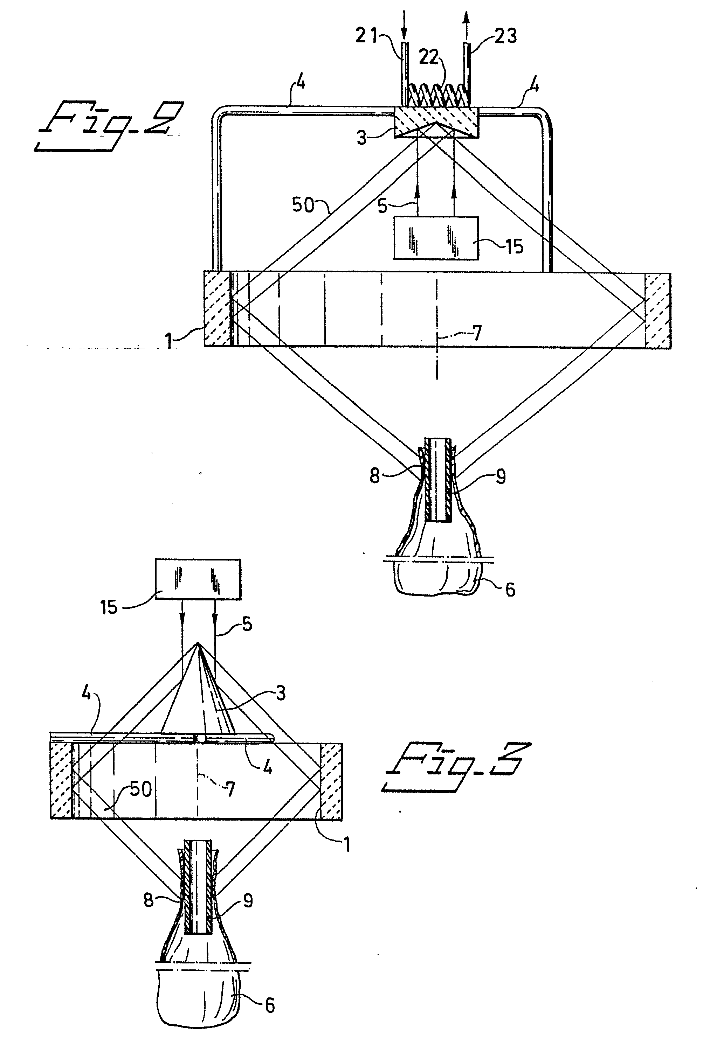

Fig. 1 shows schematically an axial section through a first embodiment of the apparatus according to the invention. Fig. 2 shows schematically an axial section through a second embodiment of the invention. Fig. 3 shows schematically an axial section through the third embodiment of the invention.

EMBODIMENTS

In Fig. 1 there is shown a laser unit 15 which emits a cylindrical laser beam 5. The beam 5 is directed coaxially onto the top of a conical mirror 3. The beam 5 is deflected by the mirror 3 to a flat circumferential radiation beam 50.

An annular internally reflecting conical mirror 1 which has an aperture 10 for the beam 5, is arranged coaxial with the mirror 3 and is located in such an axial position relative to the mirror 3 that it receives the radiation field 50 and deflects same. An internally reflecting conical mirror 2 is located coaxial with the mirrors 1 and 3 and is arranged to receive the field reflected by mirror 1 and to deflect the radiation field toward its axis. An article consisting of a thermoplastics bag 6 of foil material having a throat
8 which tightly surrounds a thermoplastics tube 9,
is located with the tube 9 coaxial with the axis of
mirror 2 and in such an axial position relative to
mirror 2 that the radiation beam 50 hits an intended
exterior circumferential area of the article.

The laser beam 5 can, if so desired, be convergent
in order to focus the radiation beam 50 to a narrow
annular area on the article.

The mirrors 1 and 2 are mutually rigidly connected to each other by means of a rod 18. The mirror 3 is
supported relative to the rod 18 and the mirrors 1,2
by means of three angularly equally separated rods 4
which extend from the mirror 3 through the radiation
path between mirrors 1 and 2 to the element 18. It
is appreciated that the intensity of the beam in the
radiation path between mirrors 1 and 2 is substantially
lower than in the incident beam 5, and therefore the
rods 4 are subjected to a limited energy intensity from
the field 50. As the field 50 between the mirrors 1 and
2 is at a substantial radial distance from the axis
of the beam 5, and the treatment area of the article,
it is appreciated that the effective radiation screening
of the rods is relatively small and neglictible.

Fig. 2 shows an embodiment wherein a laser beam
5 is directed coaxially with an internally reflecting
rotational symmetric conical mirror 3, the cone angle
of which is somewhat more than $60^{\circ}$. Mirror 3 deflects
the beam 5 to a conical circumferential radiation field
50. An annular circular cylindric internally reflecting
mirror 1 is arranged coaxial with the axis 7 of
mirror 3 in such an axial position that it receives
the radiation beam 50 and deflects same inwardly toward its axis 7 to hit an annular exterior sealing area
on the article 6,8,9, the tube 9 of which  is located coaxially with the mirrors 1 and 3.

In the embodiment according to Fig. 2 a heat exchanger 22 is arranged on the back of mirror 3 in order to cool the mirror. The heat exchanger 22 is supplied with a cooling fluid via a conduit 21, and conduit 23 leads away the fluid from the heat exchanger 22. The mirror 3 is supported from the mirror 1 by means of rods 4. In the embodiment according to Fig. 2, the rods 4 need not extend through the radiation field 50 or the laser beam 5. In the embodiment according to Fig. 2, the laser beam can be projected at right angles to the axis 7 of mirrors 1 and 2 to a flat mirror 15 which deflects the laser beam 5 such that it is directed coaxially through the reflecting surface of mirror 3.

Fig. 3 shows a laser unit, the laser beam 5 of which falls coaxially onto the top of a conical externally reflecting mirror 3 which deflects the beam 5 to a conical circumferential field 50. A cylindrical internally reflecting mirror 1 is arranged coaxial with mirror 3 and is located in such an axial position relative to mirror 3, that it receives the radiation beam 50 and deflects same toward its axis where the radiation beam 50 hits an annular sealing area on the article 6-8, the tube of which is located coaxial with the mirrors 1 and 3. At the embodiment according to Fig. 3, the cone angle of mirror 3 should be less than $90^{\circ}$.

The laser beam which falls onto the inventive apparatus has usually a Gaussian intensity disbribution over its cross section. This means that the beam 5 has a relatively high intentisy in its central portion and a relatively low intensity in its peripherial portion. The radiation beam 50 will therefore have an asymmetrical intensity distribution over its width. In the embodiment according to Fig. 1, the field 50 will then have its highest intensity towards the interior of bag 6 when the bag is oriented in the way shown in Fig. 1. In the embodiments according to Figs. 2 and 3, the highest intensity of the field 50 will lie towards the mouth of the bag throat. In the case the energy supplied by the laser beam tends to cause burning of the bag throat material, the bag material away from the bag mouth would then be subjected to a lower radiation intensity such that a useful tight seal could be achieved in spite of burning at said one end of the seal. In the embodiment according to Fig. 1, the highest radiation intensity of the field lies adjacent the interior of the bag such that a risk for leakage could occur unless the filed intensity distribution is modified in some conventional way, to arrange the zone of highest intensity in the sealing area more adjacent to the mouth of the bag.

In order to avoid overheating of the top areas of the mirrors 3, the mirrors can be provided with cooling means such as cooling fans which direct a cooling gas stream toward them. Alternatively, the mirrors can, as is indicated in Fig. 2, be provided with true heat exchangers through which a cooling fluid is pumped, and in the embodiments according to Fig. 1 and 3, the cooling fluid can be supplied and taken away via channels in the rods 4.

The article shown in Figs. 1-3 comprises a bag 6 having a throat 8 and the bag and throat can be formed by conventional sealing or welding of two superposed thermoplastics sheets. It is true that protruding free fins then are created in the throat area 8 of the bag, but it has turned out that such fins have not caused any problems relating to tight sealing of the bag throat 8 to the tube 9. It is, however, conceivable to form an aperture in a recilient thermoplastics foil, said aperture having smaller dimensions than the exterior dimensions of the tube 9 and force the tube through the foil such that the foil material adjacent the edges of the aperture are stretched and turned such that the annular edge portion connects to an axially extending portion of the circumference of tube 9. Then the foil can be folded along a line which substantially coinsides with said aperture, and then the edges of the foil can be sealed to each other by means of conventional heat sealing or welding such that the aperture edge areas of the foil form said bag throat of the article.

The mirrors 1, 2, and 3 can to advantage be rotational symmetric and have generatrices in the form of straight lines. It should, however, be clear that the generatrices, if so desired, can have curved shape in order to converge or diverge the radiation beam such that the field has a desired width at the treatment area on the article.

CLAIMS

1.    Apparatus for treatment of an exterior
annular circumferential area of an article by means
of a radiation energy beam, especially for annular
sealing of a tubular thermoplastics foil by means of
a laser beam to the exterior surface of a thermoplastics tube, which is surrounded by the foil in
the sealing area, characterized thereby that the
first conical mirror means (3) which is located
coaxial with the incident beam (5) and is arranged to
deflect the incident beam to a radiation field which
forms an angle to and extends around the axis (7)
of the first mirror means (3), and a second annular
mirror means (1,2) which is located essentially coaxial
with the first mirror means (3) and is arranged to
receive the radiation field  and deflect same inwardly
toward its axis, the circumferential area of the article
being intended to be located coaxial with the second
mirror means (1,2) and in such an axial position relative to said second mirror means that the circumferential area of the article is hit by the radiation
field.

2.    Apparatus according to claim 1, characterized
thereby that the first mirror means is an externally
reflecting mirror which is turned with its top
facing the incident beam (5).

3.    Apparatus according to claim 1, characterized
in that the first mirror means (3)  is an internally
reflecting conical mirror which is turned with its top
facing away from the incident beam (5).

4.    Apparatus according to anyone of claims 1-3,
characterized in that the second mirror means comprises
an internally reflecting annular mirror (3) which preferably is arranged coaxial with the first mirror means
(3).

5.   Apparatus according to anyone of claims 1-3, characterized in that the second mirror means (1,2) comprises a first and a second annular frusto-conical internally reflecting mirror (1,2) of which the first mirror receives the radiation field from the first mirror means and deflects same toward the second annular mirror, which in turn is arranged to deflect the radiation field, preferably at right angles to its axis.

6.   Apparatus according to anyone of claims 1-5, characterized in that the first and the second mirror means are formed by rotational symmetrical mirrors (3,1; 1,2,3).

7.   Apparatus according to anyone of claims 3-6, characterized in that the cone angle of the first mirror means is  at least 60$^{o}$.

8.   Apparatus according to anyone of claims 1-4, 6 and 7, characterized in that the annular mirror (1) of the second mirror means is circular cylindrical.

Fig_1

Fig. 2

Fig. 3

0087403

2/2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | GB-A-2 022 987 (PHILIP MORRIS) <br> * Figures 4-9 * | 1-8 | B 23 K 26/06 <br> B 29 C 27/02 |
| Y | IBM TECHNICAL DISCLOSURE BULLETIN, vol. 13, no. 10, March 1971, page 3098, New York, USA <br> M. ARRABITO et al.: "Laser perforation technique" * Figures * | 1,2,4, 6,8 | |
| Y | US-A-4 197 157 (HAGGERTY) <br> * Figure 28 * | 4-6 | |
| A | US-A-4 020 319 (R.W. SHEPARD et al.) <br> * Figure 5 * | 5 | |
| A | DE-C- 370 991 (SIEMENS) <br> * Figures * | 2-4 | **TECHNICAL FIELDS SEARCHED (Int. Cl. ³)** |
| A | US-A-1 788 910 (BUTTOLPH) <br> * Figures * | 3 | B 23 K <br> B 29 C |
| A | US-A-4 264 349 (GREY) <br> * Figure 2 * | | |
| A | DE-A-1 111 809 (NIGRIN) <br> * Figures * | | |

The present search report has been drawn up for all claims

| Place of search <br> THE HAGUE | Date of completion of the search <br> 25-05-1983 | Examiner <br> CORDENIER J. |
|---|---|---|